# EUROPEAN PATENT SPECIFICATION

(11) **EP 1 670 195 B1**
(45) Date of publication and mention of the grant of the patent: **07.02.2007**
(21) Application number: 04106531.9
(22) Date of filing: 13.12.2004
(51) Int. Cl.: H04L 12/58, H04L 29/06, H04Q 7/22

(54) **A method and device for switching from a first messaging protocol/service to a second messaging protocol/service**
Verfahren und Vorrichtung um von einem ersten Nachrichtenprotokoll/-dienst zu einem zweiten Nachrichtenprotokoll/-dienst zu wechseln
Méthode et dispositif pour changer d'un premier protocole/service de message à un second protocole/service de message

(43) Date of publication of application: 14.06.2006
(73) Proprietor: Research In Motion Limited, Waterloo, Ontario N2L 3W8 (CA)
(72) Inventor: Klassen, Gerhardt Dietrich, N2T 1H7, Waterloo, (CA); Wisebourt, Shaul S., N2L 2W6, Waterloo (CA)
(74) Representative: Rickard, David John

(56) References cited:
- DE-A1- 10 127 360
- HARJULA E. ET ALL: "Plug-and-Play Application Platform: Towards Mobile Peer-to-Peer" MUM 2004, 27 October 2004 (2004-10-27), XP002326464 ACM
- "Digital cellular telecommunications system (Phase 2+); Universal Mobile Telecommunications System (UMTS); Security Mechanisms for the (U)SIM application toolkit; Stage 2 (3GPP TS 23.048 version 5.7.0 Release 5); ETSI TS 123 048" ETSI STANDARDS, EUROPEAN TELECOMMUNICATIONS STANDARDS INSTITUTE, SOPHIA-ANTIPO, FR, vol. 3-T3, no. V570, June 2003 (2003-06), XP014007531 ISSN: 0000-0001

## Description

The technology disclosed in this application relates to messaging services and protocols.

Modern devices are capable of messaging using a number of known messaging protocols and services. Some protocols/services have certain weaknesses such as cost and unreliability. Some are considered relatively slow and may be network specific.

One existing messaging protocol/service is the SMS (short message service) protocol/service which is often used in cellular type services to relay short messages. Although SMS is a relatively widespread means of messaging communication, unfortunately it has the aforesaid weaknesses. Use of SMS services not only can cost a user a non-negligible amount per message, resulting in relatively hefty costs per month or per year, but also suffers from a relatively frequent loss of messages sent by users.

It is noted that Short Message Service (SMS) usually refers to wireless alphanumeric text messages sent to a PCS telephone. The GSM protocol is, as yet, the only protocol to support text responses from a PCS telephone. Several competing protocols support the receiving of these messages but not the transmitting, or the responding back to the sender. The supporters of these other protocols are now adding on the ability to initiate or respond to text messages. Some other existing protocols may not be as susceptible to reliability problems and are not as costly, however, they may not be as widespread as SMS. For example, there are peer to peer (P2P) protocols that allow one device to communicate with another device without any server/message center interference. Such services may allow messages to be sent with high speed and reliability regardless of the type of network that the devices are running on. Specific examples of such peer-to-peer protocols include JXTA P2P protocol.

Existing user devices now have the ability to be used to communicate with different media and over various communication protocols/services depending upon choices made by the user of the device. A common practice utilized in communication is to answer a message of a communications session using the same media and communication protocol as the original message. Consistent with this is the often included device feature of "reply" which enables the recipient of a message to reply to the sender of the message in the same media and over the same communication protocol/service as the original message.

An article by E. Harjula et al, entitled "Plug-and-play Application Platform: towards Mobile Peer-to-Peer", describes mobile communication methodologies in which two devices communicate using multiple protocols, the protocol capabilities of each device being known to the other device. General Methods, devices, and computer readable media are provided for switching communications from a first messaging protocol to a second messaging protocol by use of messaging information being embedded in a header of a first message of the first messaging protocol to enable the recipient to contact the sender over the second messaging protocol.

According to one broad aspect, the invention provides a method of switching from a first messaging protocol/service to a second messaging protocol/service for communications between a first user device and a second user device, the method comprising: communicating a first message using the first messaging service/protocol containing messaging information for messaging using the second messaging protocol/service; and switching to the second messaging protocol/service using the messaging information after the communicating of the first message.

In some embodiments, the method for execution by the first user device, wherein: said communicating comprises sending the first message from the first user device; and said switching to the second messaging service/protocol comprises receiving a second message of the second service/protocol at the first user device and thereafter communicating using the second messaging service/protocol.

In some embodiments, the method for execution by the second user device wherein: said communicating comprises receiving the first message at the second user device; and said switching to the second messaging service/protocol comprises extracting the messaging information and transmitting a second message using the second messaging service/protocol at the second user device and thereafter communicating using the second messaging service/protocol in accordance with the messaging information.

In some embodiments, the method for execution by the first user device and the second user device, wherein: said communicating comprises: a) sending the first message from the first user device to the second user device; b) receiving the first message at the second user device; said switching to the second messaging service/protocol comprises: c) extracting the messaging information and sending a second message using the second messaging service/protocol from the second user device to the first user device in accordance with the messaging information; and d) receiving the second message at the first user device.

In some embodiments, a method further comprises before communicating: determining from predetermined messaging protocol/service options whether messaging between the first user device and the second user device is permitted to be switched from the first messaging service/protocol to the second messaging service/protocol.

In some embodiments, the first messaging service/protocol comprises SMS or an SMS-like service/protocol, and the second messaging service/protocol comprises a P2P (peer to peer) messaging service/protocol.

In some embodiments, the messaging information is contained in the user data header (UDH) of the first message.

In some embodiments, the messaging information comprises a PIN number for use in P2P messaging.

According to another broad aspect, the invention provides a user device adapted to switch from a first messaging service/protocol to a second messaging service/protocol for communications with another user device by communicating a first message of the first messaging service/protocol having a user data header (UDH) including messaging information for the second messaging service/protocol, and switching to the second messaging service/protocol using the messaging information for the second messaging service/protocol after the communicating of the first message.

In some embodiments, the user device comprises: a receiver for receiving the first message from the another user device; a processing function for obtaining the messaging information from first message; a transmitter for transmitting a message using the second messaging service/protocol with use of the messaging information to the another user device, thereby switching to the second messaging service/protocol.

In some embodiments, the processing function is further adapted to determine from predetermined messaging protocol/service options whether messaging between the user device and the another user device is permitted to be switched from the first messaging service/protocol to the second messaging service/protocol.

In some embodiments, the user device comprises: a transmitter for transmitting the first message to the another user device; a receiver for receiving a second message using the second messaging service/protocol from the another user device, thereby switching to the second messaging service/protocol.

In some embodiments, the user device comprises a transmitter, a receiver and a processing function, wherein: the user device is adapted to initiate switching to the second messaging service/protocol by: a) sending the first message to the another user device; b) receiving a message using the second messaging service/protocol from the another user device thereby switching to the second messaging service/protocol; the user device is adapted to switch protocol upon initiation by another user device by: c) receiving the first message from the another user device; and d) sending a second message using the second messaging service/protocol to the another user device thereby switching to the second messaging service/protocol.

In some embodiments, the first messaging service/protocol comprises an SMS or SMS-like messaging service/protocol, and the second messaging service/protocol comprises a P2P (peer to peer) messaging service/protocol.

In some embodiments, the messaging information comprises a PIN number for use in the P2P messaging service/protocol.

In some embodiments, the PIN number is sent in the user data header of the first message.

According to another broad aspect, the invention provides a computer readable medium comprising stored instructions for execution at a first user device, the instructions implementing a method of switching from a first messaging service/protocol to a second messaging service/protocol for communications between the first user device and a second user device, the method comprising: communicating a first message using the first messaging service/protocol including messaging information for a second messaging service/protocol; and switching to the second messaging service/protocol using the messaging information after the communicating of the first message.

In some embodiments, said communicating comprises sending the first message from the first user device; and said switching to the second messaging service/protocol comprises receiving a message using the second messaging service/protocol at the first user device and thereafter communicating using the second messaging service/protocol.

In some embodiments, said communicating comprises receiving the first message at the second user device; and said switching to the second messaging service/protocol comprises transmitting a message using the second messaging service/protocol at the second user device and thereafter communicating using the second messaging service/protocol.

In some embodiments, said communicating comprises: a) sending the first message from the first user device to the second user device; b) receiving the first message at the second user device; said switching to the second messaging service/protocol comprises: c) sending a second message using the second messaging service/protocol from the second user device to the first user device; and d) receiving the second message at the first user device.

In some embodiments, the method further comprises before communicating: determining from predetermined messaging protocol/service options whether messaging between the first user device and the second user device is permitted to be switched from the first messaging service/protocol to the second messaging service/protocol.

In some embodiments, the first messaging service/protocol is SMS or SMS-like, and the second messaging service/protocol is P2P (peer to peer).

In some embodiments, the messaging information comprises a PIN number.

In some embodiments, the second messaging service/protocol is selected from a set of one or more possible messaging service/protocols using expense as a selection criteria.

In some embodiments, the second messaging service/protocol is selected from a set of one or more possible messaging service/protocols using reliability as a selection criteria.

Other aspects and features will become apparent to those of ordinary skill in the art upon review of the following description of specific embodiments in conjunction with the accompanying figures.

### BRIEF DESCRIPTION OF THE DRAWINGS

Preferred embodiments will now be described with reference to the accompanying diagrams, in which:
FIG. 1 is a block diagram of a device adapted to perform messaging protocol/service switching according to one embodiment;
FIG. 2 is a block diagram of two devices performing messaging protocol/service switching according to one embodiment;
FIG. 3 is a flow diagram of steps performed by a pair of devices performing messaging protocol/service switching according to one embodiment;
FIG. 4 is a flow diagram of steps performed by a user device sending a message over a first messaging protocol/service which initiates messaging protocol/service switching according to one embodiment; and
FIG. 5 is a flow diagram of steps performed by a user device receiving a message over a first messaging protocol/service which initiates messaging protocol/service switching according to one embodiment.

### PREFERRED EMBODIMENTS

Even though there are varying considerations of cost efficiency, reliability, and popularity of a communications protocol, sometimes the actual chosen communication protocol may be initially used simply because the protocol is more widespread. For example, cell phone numbers which enable regular cell phone and SMS services are commonly exchanged to effect communication. Some devices however may have alternate methods of communication, which may be preferable. In some cases, both devices are capable of communication over a more preferable protocol, but unfortunately neither user is aware of the capabilities of the other user's device.

Such a situation may arise when for example, both user's are utilizing devices that support a P2P protocol requiring a PIN (personal identification number) that identifies a particular device rather than a person. For example, in a first case, a user initiating conversation may not know that a second user has a P2P capable device. In another case, a user of a first device may be aware of the second user's device capability, but does not know the PIN of the second user's device. This might occur for example when a user changes their device, but keeps the same phone number (for example as would occur if a SIM card is moved to another P2P enabled device).

One solution to this situation provided by some embodiments in this application that is specific to dealing with switching between the SMS protocol and a peer to peer protocol requiring a PIN is to embed a user device's PIN number in an SMS user data header (UDH) when an initial SMS message is sent, the embedding of the user device's PIN being transparent to the user. The receiving device is configured to check any incoming initial SMS message for this PIN embedded in the UDH. As in the case of the sending device, the receiving device performs this operation transparent to the user. Once the receiving side has detected a PIN number in the header of the initial SMS message it switches to P2P messaging right away, assuming it is able to do so. The sending device once entering the P2P session will, instead of sending SMS messages and embedding PIN numbers in their headers, will simply continue communication over P2P. In some implementations, P2P messaging and SMS messaging have similar conversation-like user interfaces (UIs) and as such protocol/service switching of this kind can occur absolutely transparently to the user.

Although it may be preferable to switch between messaging protocol/services at the beginning of messaging communications, a switch between messaging protocol/services may be conducted at any time during a messaging communications session.

In general two devices may switch between any first and second messaging protocol/service by including in a header of a message sent, communication information for communicating with the sender using a different messaging protocol/service.

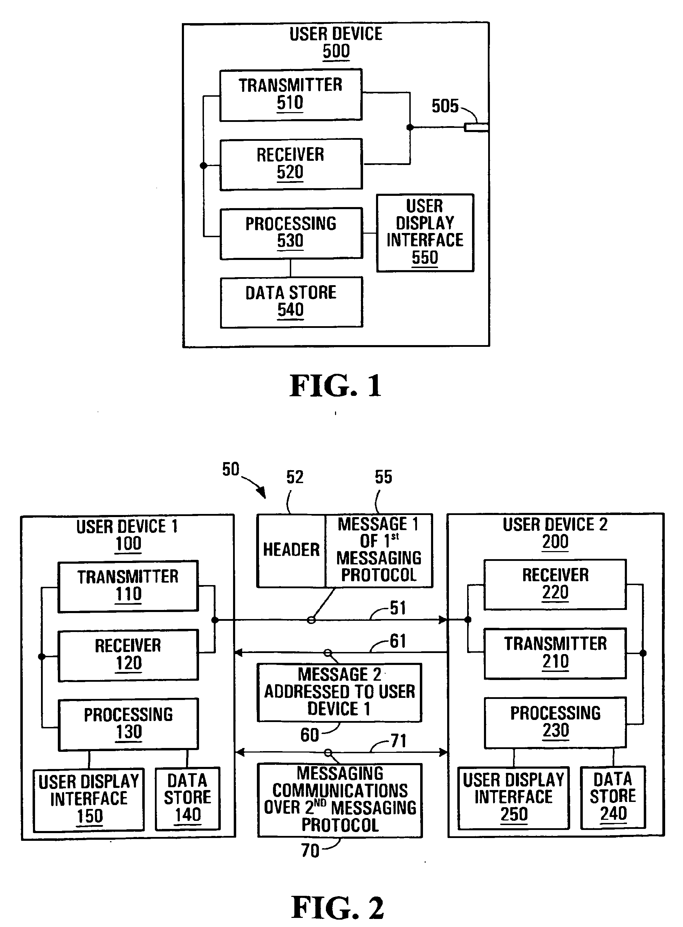

Referring to Figure 1, a device adapted to perform messaging protocol/service switching according to one embodiment will now be discussed. The device is capable of communicating with other devices using at least a first service/protocol and a second service/protocol. User device 500 has a transmitter 510, a receiver 520, an antenna 505, processing 530, a user display interface 550, and a data store 540. These basic elements will be described below in respect of their function within the method and functionality of the embodiments. The transmitter 510 and receiver 520 function to transmit and receive through antenna 505 over-the-air (OTA) signals, which in the present embodiments comprise short messages. Other signals may also be received. Processing 530, functions to retrieve any data from the data store 540 required to assist it in extracting and embedding messaging information (addresses or identification) respectively out of and into the header of the first message of the first messaging protocol/service. This could include any information identifying the device ID according to a messaging protocol/service, and information for recognizing device ID's of other messaging protocol/services the device is capable of communicating with. The data store 540 may also contain messaging rules or options for use in determining whether or not messaging protocol/service switching is to be permitted. These may have been preset upon manufacture or initialization of the functioning of the user device or may be set by a user through use of a user display interface 550. Once the messaging options if any have been set, the user device will behave in accordance thereto completely transparent to the user, and not requiring any real time input from the user.

It should be understood that the particulars of the user device shown in Figure 1 are for the purpose of example only. In particular, it should also be understood that the particular configuration and connections between the elements shown in Figure 1 form only one example implementation. Elements can be combined or separated into additional elements. Each element may also be embodied in whole or in part or in any combination thereof, in hardware, software, firmware. Furthermore, separate hardware and/or software may be used to implement each of the different services/protocols, or there may be partial or complete overlap between the hardware and/or software used to implement the different services/protocols.

Referring now to Figure 2, two devices performing messaging protocol/service switching according to one embodiment will now be discussed.

User device1 100 and user device2 200 are each capable of messaging over a first and second messaging protocol/service. Each has a transmitter (110, 210), a receiver (120, 220), processing (130, 230), and a data store (140, 240).

In the event that the user of user device1 100 initiates messaging with user or user device2 200, a first message 50 of the first protocol/service is to be sent 51 to user device2 200. User device1 determines if messaging protocol/service switching is to be initiated. If so, the message includes the text message 55 of the first messaging protocol/service, and a header 50 of the first messaging protocol/service. The header 50 contains messaging information for use in messaging the user device1 100 over the second messaging protocol/service.

User device2 200 functions to receive the first message 50 sent 51 from the user device1 100. User device2 200 determines if messaging protocol/service switching is to be permitted. If so, when the first message 50 is received, the user device2 200 obtains the messaging information in the header 52 of the first message 50. The messaging information enables the user device2 200 to message the user device1 100 using the second messaging protocol/service. Hence, user device2 200 transmits 61 a second message 60 over a second messaging protocol/service to user device1 100 with use of the messaging information. Once user device1 100 receives the second message 60 in the second messaging protocol/service, the user device1 100 no longer sends messages of the first protocol/service to user device2 200, but instead cooperates to establish messaging communications 71 over the second messaging protocol/service 70.

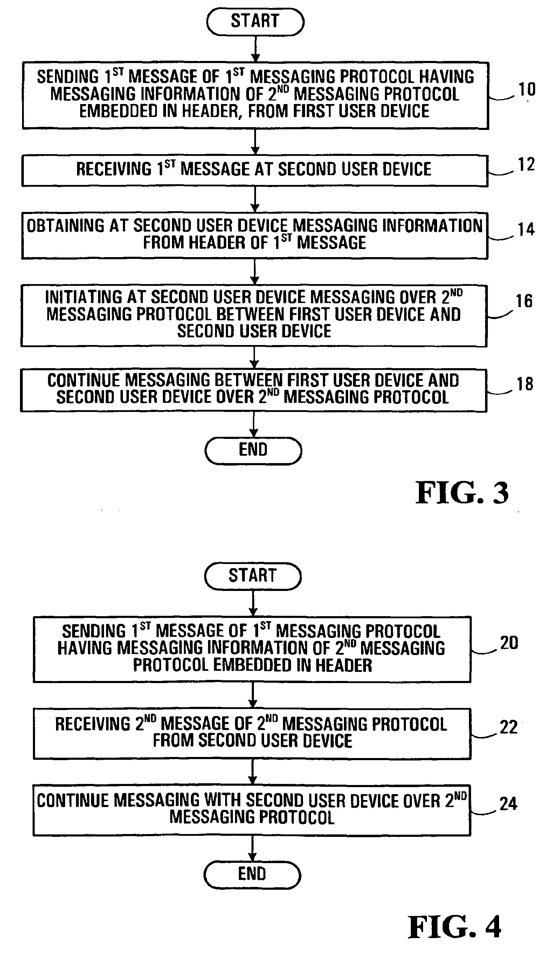

Referring to Figure 3, the steps performed by a pair of devices performing messaging protocol/service switching according to one embodiment will now be described.

In this embodiment, a first user device sends a first message whose header is embedded with messaging information at step 10. The messaging information is information which can be used to contact the first user device over a second messaging protocol/service.

At step 12, a second user device receives the first message. After receiving the first message, the first user device obtains the messaging information from the header of the first message at step 14.

At step 16, the second user device initiates messaging over the second messaging protocol/service with the first user device, and at step 18 messaging is continued with the first user device over the second messaging protocol/service.

In one specific embodiment, the first messaging protocol/service is SMS and the first message is an SMS message. The second messaging protocol/service is a peer-to-peer messaging service. In an example implementation, the messaging information to enable messaging with the first user device, is the PIN of the first user device, and this PIN is embedded in the UDH (user data header) of the first message. The result is the switching from SMS communication to P2P communication, transparent to both users. However, more generally, the messaging information is any information sent using a first protocol that is necessary to allow the second user device to contact the first user device using a second protocol/service.

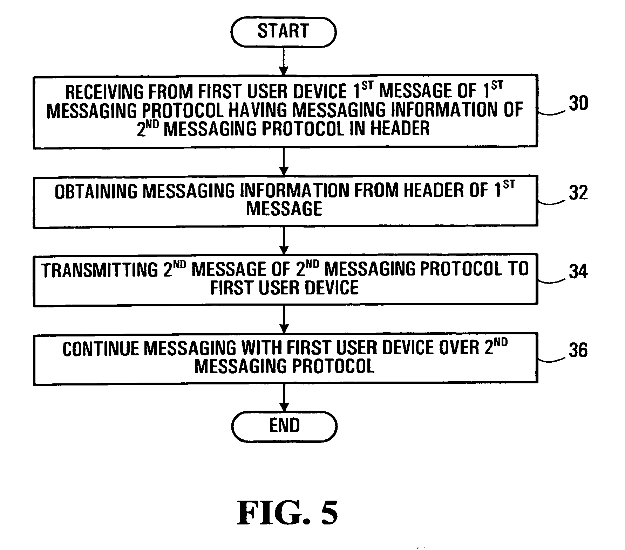

Referring to Figure 4, the steps performed by a user device sending a message over a first messaging protocol/service which initiates messaging protocol/service switching according to one embodiment will now be discussed. The first user device sends a first message of a first messaging protocol/service in step 20. The header of the first message contains messaging information which is for communicating with the user device over a second messaging protocol/service.

In step 22, the user device receives a second message which has originated at a second user device and which is of a second messaging protocol/service. This reflects the fact that the second user device has begun communications in accordance with a switch of protocol/service.

Finally, in step 24, the first user device continues to perform messaging with the second user device over the second messaging protocol/service.

Referring to Figure 5, the steps performed by a user device receiving a message over a first messaging protocol/service which initiates messaging protocol/service switching according to one embodiment will now be discussed.

At step 30, a second user device receives a first message of a first messaging protocol/service from a first user device. In the header of the first message is messaging information for use in contacting the first user device over a second messaging protocol/service.

At step 32, the messaging information is obtained from the header of the first message, and with use of this information at step 34, the second user device transmits a second message in a second messaging protocol/service to the first user device.

At step 36, thereafter for the remainder of messaging, the second user device and the first user device utilize the second messaging protocol/service.

Preferably, the functionality of Figure 4 and Figure 5 may be carried out by a single user device configured to act as a transmitter which initiates the messaging protocol/service switch or the receiver which responds to the messaging protocol/service switch.

As mentioned herein above, variations of the solution can include messaging options stored at a user device (in the specific embodiments discussed this could be SMS options) for allowing the user before hand to define the default transparent behavior of the user device, as to whether or not communication information (which here is a PIN number) is to be sent in a header (for example an SMS user data header), and conversely whether to allow switching to the other form of messaging (P2P messaging) upon receipt of a message of a first protocol/service with connection information of a second protocol/service embedded in the header of the message of the first protocol/service (for example an SMS message with a PIN embedded in the UDH). These options therefor function to determine when the messaging protocol/service switching is to be performed, and when no messaging protocol/service switching is to be performed (regular known messaging is executed).

Many users would consider it an advantage to use a device having this capability over other mobile devices because of the opportunity to automatically save on per message costs such as that charged for SMS messages. Taking into account a growing number of devices which can communicate using different messaging protocol/services, users will be able to save money while guaranteeing full, transparent, fast, reliable and flexible functionality.

The specific examples have focussed on switching between a first messaging protocol that is SMS messaging and a second messaging protocol that is peer-to-peer messaging. More generally, embodiments are applicable to automate the switching between any two selected messaging protocols. Other messaging protocol examples include MMS (multimedia messaging service), email. MMS is a new standard in mobile messaging. Like SMS, MMS is a way to send a message from one mobile to another. The difference is that MMS can include not just text, but also sound, images and video. It is also possible to send MMS messages from a mobile phone to an email address.

In a preferred embodiment, a pair of devices communicating using a first one of these protocols (or some other messaging protocol or some other messaging protocol not specifically listed) will automatically attempt to switch to a second of these protocols (or some other messaging protocol not specifically listed) that is less expensive than the first protocol. If two devices each support respective sets of protocols, preferably the end result is that a switch is made to a less expensive protocol that both devices support. In some embodiments, the switch is made to the least expensive protocol that both devices support. For example, other peer to peer protocols may be supported that are less expensive than SMS. Examples of particular switches that may result in reducing expense are switches from SMS to email, switch from MMS to email, switch from SMS or MMS to another less expensive peer to peer protocol.

Alternatively, a switch in protocols to one that is more reliable may be made. Alternatively, a switch to a protocol that optimizes a combination of expense and reliability is made.

Another embodiment provides computer media comprising instructions for a processor of a device such as those described hereinabove, to carry out the functionality for messaging protocol/service switching such as that described herein above.

Numerous modifications and variations are possible in light of the above teachings. It is therefore to be understood that within the scope of the appended claims, what is disclosed in accordance with the application may be practiced otherwise than as specifically described herein.

## Claims

1. A method of switching from a first messaging service/protocol to a second messaging service/protocol for communications between a first user device (100) and a second user device (200) the method **characterised by**
communicating a first message using the first messaging service/protocol containing messaging information (52) for messaging using the second messaging service/protocol; and
switching to the second messaging service/protocol using the messaging information after the communicating of the first message.

2. The message of claim 1, wherein:
said communicating comprises sending the first message from the first user device; and
said switching to the second messaging service/protocol comprises receiving a second message of the second service/protocol at the first user device and thereafter communicating using the second messaging service/protocol.

3. The method of claim 1 of claim 2, wherein:
said communicating comprises receiving the first message at the second user device; and
said switching to the second messaging service/protocol comprises extracting the messaging information and transmitting a second message using the second messaging service/protocol at the second user device and thereafter communicating using the second messaging service/protocol in accordance with the messaging information.

4. A method according to any one of claims 1 to 3 further comprising before communicating:
determining from predetermined messaging service/protocol options whether messaging between the first user device and the second user device is permitted to be switched from the first messaging service/protocol to the second messaging service/protocol.

5. The method of any one of claims 1 to 4, wherein the first messaging service/protocol comprises SMS or an SMS-like service/protocol, and the second messaging service/protocol comprises a P2P (peer to peer) messaging service/protocol.

6. The method of any one of claims 1 to 5, wherein the messaging information is contained in the user data header (UDH) of the first message.

7. The method of any one of claims 1 to 6, wherein the messaging information comprises a PIN number for use in P2P messaging.

8. The method of any one of claims 1 to 7, wherein the second messaging service/protocol is selected from a set of one or more possible messaging service/protocols using expense and/or reliability as a selection criteria.

9. The method of any one of claims 1 to 8 wherein the communicating and switching takes place automatically and transparent to users of the first and second user devices.

10. A user device (100, 200) adapted to switch from a first messaging service/protocol to a second messaging service/protocol for communications with another user device **characterised by** having means to communicate a first message (50) of the first messaging service/protocol having a user data header (52) UDH comprising messaging information for the second messaging service/protocol, and to switch to the second messaging service/protocol using the messaging information for the second messaging service/protocol after the communicating of the first message.

11. The user device of claim 10 comprising:
a receive adapted to receive the first message from the another user device;
a processing function adapted to obtain the messaging information from first message;
a transmitter adapted to transmit a message using the second messaging service/protocol with use of the messaging information to the another user device, thereby switching to the second messaging/protocol.

12. The user device of claim 11, wherein the processing function is further adapted to determine from predetermined messaging service/protocol options whether messaging between the user device and the another user device is permitted to be switched from the first messaging service/protocol to the second messaging service/protocol.

13. The user device of any one of claims 10 to 12 comprising:
a transmitter adapted to transmit the first message to the another user device;
a receiver adapted to receive a second message using the second messaging service/protocol from the another user device, thereby switching to the second messaging service/protocol.

14. The user device of any one of claims 10 to 13, wherein the first messaging service/protocol comprises an SMS or SMS-like messaging service/protocol, and the second messaging service/protocol comprises a P2P (peer to peer) messaging service/protocol.

15. The user device of claim 14, wherein the messaging information comprises a PIN number for use in the P2P messaging service/protocol.

16. The user device of claim 15 adapted to send the PIN number in the user data header of the first message.

17. The user device of any one of claims 9 to 15 adapted to communicate and to switch automatically and transparent to users of the user device and the another user device.

18. A computer readable medium comprising program code means for execution at the user device of any of claims 10 to 16, the program code means implementing the method of any of claims 1 to 8.

## Patentansprüche

1. Verfahren zum Umschalten von einem ersten Mitteilungsübermittlungsdienst bzw. -protokoll zu einem zweiten Mitteilungsübermittlungsdienst bzw. -protokoll zur Kommunikation zwischen einer ersten Benutzervorrichtung (100) und einer zweiten Benutzervorrichtung (200), wobei das Verfahren durch Folgendes **gekennzeichnet** ist:
Übertragen einer ersten Mitteilung unter Verwendung des ersten Mitteilungsübermittlungsdienstes bzw. -protokolls, die Mitteilungsübermittlungsinformationen (52) zur Mitteilungsübermittlung unter Verwendung des zweiten Mitteilungsübermittlungsdienstes bzw. -protokolls enthält; und
Umschalten zu dem zweiten Mitteilungsübermittlungsdienst bzw. -protokoll unter Verwendung der Mitteilungsübermittlungsinformationen nach der Übertragung der ersten Mitteilung.

2. Mitteilung nach Anspruch 1, wobei:
die Übertragung das Senden der ersten Mitteilung von der ersten Benutzervorrichtung umfasst; und
das Umschalten zu dem zweiten Mitteilungsübermittlungsdienst bzw. -protokoll den Empfang einer zweiten Mitteilung des zweiten Mitteilungsübermittlungsdienstes bzw. -protokolls an der ersten Benutzervorrichtung und danach die Übertragung unter Verwendung des zweiten Mitteilungsübermittlungsdienstes bzw. -protokolls umfasst.

3. Verfahren nach Anspruch 1 oder Anspruch 2, wobei:
die Übertragung den Empfang der ersten Mitteilung an der zweiten Benutzervorrichtung umfasst; und
das Umschalten zu dem zweiten Mitteilungsübermittlungsdienst bzw. -protokoll Folgendes umfasst: das Ausblenden der Mitteilungsübermittlungsinformationen und die Übertragung einer zweiten Mitteilung unter Verwendung des zweiten Mitteilungsübermittlungsdienstes bzw. -protokolls an der zweiten Benutzervorrichtung und danach die Übertragung unter Verwendung des zweiten Mitteilungsübermittlungsdienstes bzw. -protokolls gemäß den Mitteilungsübermittlungsinformationen.

4. Verfahren nach einem der Ansprüche 1 bis 3, das vor der Übertragung des Weiteren Folgendes umfasst:
die Ermittlung ausgehend von vorherbestimmten Optionen des Mitteilungsübermittlungsdienstes bzw. -protokolls, ob es zulässig ist, die Mitteilungsübermittlung zwischen der ersten Benutzervorrichtung und der zweiten Benutzervorrichtung von dem ersten Mitteilungsübermittlungsdienst bzw. - protokoll zu dem zweiten Mitteilungsübermittlungsdienst bzw. -protokoll umzuschalten.

5. Verfahren nach einem der Ansprüche 1 bis 4, wobei der bzw. das erste Mitteilungsübermittlungsdienst bzw. -protokoll einen SMS- oder einen SMSartigen Dienst bzw. ein SMS- oder ein SMS-artiges Protokoll umfasst und der bzw. das zweite Mitteilungsübermittlungsdienst bzw. -protokoll einen bzw. ein P2P (Peer-to-Peer) Mitteilungsübermittlungsdienst bzw. -protokoll umfasst.

6. Verfahren nach einem der Ansprüche 1 bis 5, wobei die Mitteilungsübermittlungsinformationen in dem Benutzerdatenanfangsblock (UDH) der ersten Mitteilung enthalten sind.

7. Verfahren nach einem der Ansprüche 1 bis 6, wobei die Mitteilungsübermittlungsinformationen eine PIN-Nummer für die Verwendung bei der P2P-Mitteilungsübermittlung enthalten.

8. Verfahren nach einem der Ansprüche 1 bis 7, wobei der bzw. das zweite Mitteilungsübermittlungsdienst bzw. -protokoll aus einer Gruppe von einem oder mehreren möglichen Mitteilungsübermittlungsdiensten bzw. -protokollen unter Einsatz der Auswahlkriterien Kosten und/oder Zuverlässigkeit ausgewählt wird.

9. Verfahren nach einem der Ansprüche 1 bis 8, wobei die Übertragung und das Umschalten für die Benutzer der ersten und zweiten Benutzervorrichtung automatisch und transparent stattfindet.

10. Benutzervorrichtung (100, 200), die zum Umschalten von einem ersten Mitteilungsübermittlungsdienst bzw. -protokoll zu einem zweiten Mitteilungsübermittlungsdienst bzw. -protokoll zur Kommunikation mit einer anderen Benutzervorrichtung ausgelegt ist, **dadurch gekennzeichnet, dass** sie Folgendes aufweist: Mittel zur Übertragung einer ersten Mitteilung (50) des ersten Mitteilungsübermittlungsdienstes bzw. -protokolls, die einen Benutzerdatenanfangsblock (52) (UDH) aufweist, der Mitteilungsübermittlungsinformationen für den bzw. das zweite Mitteilungsübermittlungsdienst bzw. -protokoll umfasst, und Mittel zum Umschalten zu dem zweiten Mitteilungsübermittlungsdienst bzw. -protokoll unter Verwendung der Mitteilungsübermittlungsinformationen für den bzw. das zweite Mitteilungsübermittlungsdienst bzw. -protokoll nach der Übertragung der ersten Mitteilung.

11. Benutzervorrichtung nach Anspruch 10, die Folgendes umfasst:
einen Empfänger, der dafür ausgelegt ist, die erste Mitteilung von der anderen Benutzervorrichtung zu empfangen;
eine Verarbeitungsfunktion, die dafür ausgelegt ist, die Mitteilungsübermittlungsinformationen von der ersten Mitteilung zu erhalten;
einen Sender, der dafür ausgelegt ist, eine Mitteilung unter Verwendung des zweiten Mitteilungsübermittlungsdienstes bzw. -protokolls mit Hilfe der Mitteilungsübermittlungsinformationen zu der anderen Benutzervorrichtung zu senden, wodurch zu dem zweiten Mitteilungsübermittlungsprotokoll umgeschaltet wird.

12. Benutzervorrichtung nach Anspruch 11, wobei die Verarbeitungsfunktion des Weiteren dafür ausgelegt ist, ausgehend von vorherbestimmten Optionen des Mitteilungsübermittlungsdienstes bzw. -protokolls zu ermitteln, ob es zulässig ist, eine Mitteilungsübermittlung zwischen der Benutzervorrichtung und der anderen Benutzervorrichtung von dem ersten Mitteilungsübermittlungsdienst bzw. - protokoll zu dem zweiten Mitteilungsübermittlungsdienst bzw. -protokoll umzuschalten.

13. Benutzervorrichtung nach einem der Ansprüche 10 bis 12, die Folgendes umfasst:
einen Sender, der dafür ausgelegt ist, die erste Mitteilung zu der anderen Benutzervorrichtung zu senden;
einen Empfänger, der dafür ausgelegt ist, eine zweite Mitteilung unter Verwendung des zweiten Mitteilungsübermittlungsdienstes bzw. -protokolls von der anderen Benutzervorrichtung zu empfangen, wodurch zu dem zweiten Mitteilungsübermittlungsdienst bzw. -protokoll umgeschaltet wird.

14. Benutzervorrichtung nach einem der Ansprüche 10 bis 13, wobei der bzw. das erste Mitteilungsübermittlungsdienst bzw. -protokoll einen SMS- oder einen SMSartigen Mitteilungsübermittlungsdienst bzw. ein SMS- oder ein SMS-artiges Mitteilungsübermittlungsprotokoll umfasst und der bzw. das zweite Mitteilungsübermittlungsdienst bzw. -protokoll einen bzw. ein P2P (Peer-to-Peer) Mitteilungsübermittlungsdienst bzw. -protokoll umfasst.

15. Benutzervorrichtung nach Anspruch 14, wobei die Mitteilungsübermittlungsinformationen eine PIN-Nummer für die Verwendung beim P2P-Mitteilungsübermittlungsdienst bzw. -protokoll enthalten.

16. Benutzervorrichtung nach Anspruch 15, die dafür ausgelegt ist, die PIN-Nummer in dem Benutzerdatenanfangsblock der ersten Mitteilung zu senden.

17. Benutzervorrichtung nach einem der Ansprüche 9 bis 15, die dafür ausgelegt ist, auf Benutzer der Benutzervorrichtung und der anderen Benutzervorrichtung automatisch und transparent zu übertragen und umzuschalten.

18. Computerlesbares Medium, das Programmcodemittel zur Ausführung in der Benutzervorrichtung nach einem der Ansprüche 10 bis 16 umfasst, wobei die Programmcodemittel das Verfahren nach einem der Ansprüche 1 bis 8 implementieren.

## Revendications

1. Procédé permettant de passer d'un premier service / protocole de messagerie à un second service / protocole de messagerie destiné à des communications entre un premier dispositif utilisateur (100) et un second dispositif utilisateur (200), le procédé étant **caractérisé par** :
la communication d'un premier message à l'aide du premier service / protocole de messagerie contenant des informations de messagerie (52) destinées à faire l'objet d'une opération de messagerie à l'aide du seconde service / protocole de messagerie ; et
le passage au second service / protocole de messagerie à l'aide des informations de messagerie après la communication du premier message.

2. Message selon la revendication 1, dans lequel :
ladite communication comprend l'envoi du premier message à partir du premier dispositif utilisateur ; et
ledit passage au second service / protocole de messagerie comprend la réception d'un second message du second service / protocole de messagerie au niveau du premier dispositif utilisateur et la communication ultérieure à l'aide du second service / protocole de messagerie.

3. Procédé selon la revendication 1 ou 2, dans lequel :
ladite communication comprend la réception du premier message au niveau du second dispositif utilisateur ; et
ledit passage au second service / protocole de messagerie comprend l'extraction des informations de messagerie et la transmission d'un second message à l'aide du second service / protocole de messagerie au niveau du second dispositif utilisateur et la communication ultérieure à l'aide du second service / protocole de messagerie conformément aux informations de messagerie.

4. Procédé selon l'une quelconque des revendications 1 à 3, comprenant en outre, avant la communication :
la détermination, à partir d'options de service / protocole de messagerie prédéterminées, du fait qu'il est ou non possible de passer du premier service / protocole de messagerie au second service / protocole de messagerie pour les opérations de messagerie entre le premier dispositif utilisateur et le second dispositif utilisateur.

5. Procédé selon l'une quelconque des revendications 1 à 4, dans lequel le premier service / protocole de messagerie comprend un service / protocole de messagerie courte (SMS) ou de type SMS et le second service / protocole de messagerie comprend un service / protocole de messagerie P2P (poste à poste).

6. Procédé selon l'une quelconque des revendications 1 à 5, dans lequel les informations de messagerie sont contenues dans l'en-tête des données utilisateur (UDH) du premier message.

7. Procédé selon l'une quelconque des revendications 1 à 6, dans lequel les informations de messagerie comprennent un numéro d'identification personnel (PIN) destiné à être utilisé dans les opérations de messagerie de poste à poste.

8. Procédé selon l'une quelconque des revendications 1 à 7, dans lequel le second service / protocole de messagerie est sélectionné parmi un ensemble d'un ou plusieurs service(s) / protocole(s) de messagerie possible(s) en utilisant comme critère(s) de sélection le coût et / ou la fiabilité.

9. Procédé selon l'une quelconque des revendications 1 à 8, dans lequel la communication et le passage d'un service / protocole de messagerie à l'autre se réalisent automatiquement et sont transparents pour les utilisateurs du premier et du second dispositifs utilisateurs.

10. Dispositif utilisateur (100, 200) conçu pour passer d'un premier service / protocole de messagerie à un second service / protocole de messagerie destiné à effectuer des communications avec un autre dispositif utilisateur, **caractérisé par le fait qu'**il comporte des moyens pour communiquer un premier message (50) du premier service / protocole de messagerie ayant un en-tête de données utilisateur (52) (UDH) comprenant des informations de messagerie pour le second service / protocole de messagerie et pour passer au second service / protocole de messagerie à l'aide des informations de messagerie pour le second service / protocole de messagerie après la communication du premier message.

11. Dispositif utilisateur selon la revendication 10, comprenant :
un récepteur conçu pour recevoir le premier message d'un autre dispositif utilisateur ;
une fonction de traitement conçue pour obtenir les informations de messagerie du premier message ;
un émetteur conçu pour émettre un message à l'aide du second service / protocole de messagerie en utilisant les informations de message vers l'autre dispositif utilisateur, passant ainsi au second service / protocole de messagerie.

12. Dispositif utilisateur selon la revendication 11, dans lequel la fonction de traitement est en outre conçue pour déterminer, à partir d'options de service / protocole de messagerie prédéterminées, s'il est ou non possible de passer du premier service / protocole de messagerie au second service / protocole de messagerie pour les opérations de messagerie entre le dispositif utilisateur et un autre dispositif utilisateur.

13. Dispositif utilisateur selon l'une quelconque des revendications 10 à 12, comprenant :
un émetteur conçu pour émettre le premier message à l'autre dispositif utilisateur ;
un récepteur conçu pour recevoir un second message à l'aide du second service / protocole de messagerie provenant de l'autre dispositif utilisateur, passant ainsi au second service / protocole de messagerie.

14. Dispositif utilisateur selon l'une quelconque des revendications 10 à 13, dans lequel le premier service / protocole de messagerie comprend un service / protocole de messagerie courte (SMS) ou de type SMS et le second service / protocole de messagerie comprend un service / protocole de messagerie P2P (poste à poste).

15. Dispositif utilisateur selon la revendication 14, dans lequel les informations de messagerie comprennent un numéro d'identification personnel (PIN) destiné à être utilisé dans le service / protocole de messagerie de poste à poste.

16. Dispositif utilisateur selon la revendication 15, conçu pour envoyer le numéro d'identification personnel (PIN) dans l'en-tête des données utilisateur du premier message.

17. Dispositif utilisateur selon l'une quelconque des revendications 9 à 15, conçu pour communiquer et pour passer d'un service / protocole de messagerie à un autre automatiquement et de manière transparente aux utilisateurs du dispositif utilisateur et de l'autre dispositif utilisateur.

18. Support lisible par ordinateur comprenant un moyen de code de programme destiné à être exécuté au niveau du dispositif utilisateur selon l'une quelconque des revendications 10 à 16, le moyen de code programme mettant en oeuvre le procédé selon l'une quelconque des revendications 1 à 8.
